# EUROPEAN PATENT APPLICATION

(11) **EP 1 908 573 A1**
(43) Date of publication of application: **09.04.2008**
(21) Application number: 06020903.8
(22) Date of filing: 05.10.2006
(51) Int. Cl.: B29C 65/36, B65B 25/00, B65B 51/14, B65B 51/22, B65B 51/26

(54) **Packaging machine with induction heated sealing body**

(71) Applicant: CFS Weert B.V., 6006 RV Weert (NL)
(72) Inventor: Van Rens, Joseph Johan Maria, 6003 BK Weert (NL)
(74) Representative: Wolff, Felix

(57) **Abstract**

The present invention relates to an apparatus for packaging items into a film, whereas the film is formed and or sealed by forming- and/or sealing-means, each comprising a heating body (45a,45b), which is heated by heating means (46a,46b) and which is moving and/or difficult to access, whereas the heat energy is transferred from the heating means to the heating body without a connection, especially no electrical wire connection.

## Description

The present invention relates to apparatus for packaging items into a film, whereas the film is formed and or sealed by forming- and/or sealing-means each comprising a heating body which is heated by heating means.

These machines are known from the state of the art and often comprise a sealing and/or forming means or a heating body, which is/are heated by electrical heating means which are in direct contact with the heating body. However, in a lot of cases the heating body is moving and/or which is difficult to access, so that it is almost impossible to heat it.

It was therefore an objective of the present invention to provide an apparatus for packaging items into a film that do not comprise the deficiencies of the state of the art.

The problem is solved by an apparatus for packaging items into a film, whereas the film is formed and or sealed by forming- and/or sealing-means, each comprising a heating body, which is heated by heating means and which is moving and/or difficult to access, whereas the heat energy is transferred from the heating means to the heating body without a connection, especially no electrical wire connection.

According to the present invention, the apparatus comprises forming- and or sealing means. With these means, the film is formed and or it is sealed under the influence of heat and/or pressure. Sealed in terms of the present invention means, that the edges or the twisted part of one film are sealed together and/or two or more films are sealed together. The apparatus comprises forming- and or sealing means and a heating body, which is heated by heating means. This heating body is located at and/or in or apart from the forming- and or sealing means. However, the heating body can also be at least partially identical with the forming- and or sealing means.

This heating body is heated by heating means. According to the present invention, the heat energy is transferred from the heating means to the heating body without a connection between the heating means and the heating body. Preferably, the heating body and the heating means are spaced apart and there is no physical contact, i.e. no body to body contact, between the heating body and the heating means. Preferably the heating means is stationary, while the heating body is moving. Additionally or alternatively, the heating body is difficult to access, e.g. the heating body is locate inside the film tube of a flow wrapper, so that it is difficult if not impossible to realize a direct contact between the heating means and the heating body. More preferably, there is only one heating means for a multitude of heating bodies.

A preferred heating means is a flame emitter that produces a flame which heats the heating body. Another preferred heating means is means to produce a hot fluid flow, like for example a fan, whereas the hot fluid heates the heating body. Even another heating means is means of induction, which produces a field that heats the heating body. In another preferred embodiment of the present invention, heating means is means of radiation, like for example infra red and/or microwaves, to heat the heating body. Preferably the heating body is heated by a combination of one or more different heating means.

Preferably there is one heating means for one or more heating bodies, which for example move past the stationary heating means and are thereby heated.

Preferably the inventive apparatus comprises means to measure the temperature of each heating body. Preferably this is done prior to the heating of the heating body.

Preferably the apparatus comprises means to control the heat energy transfer from the heating means to the heating body. Preferably this control is based on the reading of the temperature measuring device. In this combination a very precise control of the temperature of the heating body can be achieved. Based on the measured temperature, the heat energy which is needed to get the desired temperature of the heating body is calculated and this energy is transferred to the heating body. This preferred embodiment of the present invention has the advantage that the packaging machine is very energy efficient and no overheating of the product and/or the packaging material takes place.

The apparatus according to the present invention can be any apparatus suitable for packaging items into a film. However, preferably the apparatus is a confectionary packaging machine, a vertical- as well as a horizontal flow-wrapper, a thermoformer or a tray sealer.

Preferably or according to another aspect of the present invention the confectionary is a lollipop with a stick, whereas the lollipop head is packaged in a packaging sheet, such as a packaging film, the packaging film is sealed at its edges with sealing means, each comprising a heating body and the heat energy is transferred to the heating body without a connection, especially an electrical wire connection.

Preferably or according to another aspect of the present invention the confectionary is a lollipop with a stick, wherein the lollipop head is packaged in a sandwich packaging by sealing two film sheets together with the seals with sealing means, whereas it comprises a heating body which is heated by heating means and whereas the heat energy is transferred to the heating body without a connection, especially an electrical wire connection.

Preferably, the sealing means are located on a drum.

Another or a preferred aspect of the present invention is a packaging machine for lollipops, comprising a drum having a stationary, fixed drum part and having a drum part that is rotatable with respect thereto and includes a series of stick holders, a supply for the lollipops towards the stick holders and a supply for packaging material for the lollipops, such as a foil, towards the drum, a discharge for discharge of packaged lollipops away from the drum, wherein the packaging material supply is adapted for consecutively bringing a sheet of packaging material in front of the lollipop heads, wherein the drum is furthermore provided with means for relatively moving the stick holder and the sheet of packaging material in a first trajectory on the drum in order to let said sheet envelop or surround the lollipop head, wherein the rotatable drum part is furthermore provided with a diaphragm at every stick holder, said diaphragm being positioned at the side of the sheet of packaging material facing away from the lollipop head in order to dispose said sheet around the head in said relative movement of the stick holder and said sheet of packaging material, in which the head moves through the opening defined by the diaphragm, wherein the diaphragm is furthermore provided with means for in a next, second trajectory on the drum sealing the packaging material at or near the location of the transition of the head to the stick, wherein the sealing is carried out by sealing-means each comprising a heating body which is heated by heating means, whereas the heat energy is transferred to the heating body without a connection, especially an electrical wire connection.

Preferably, the heating means is a flat induction coil.

Another aspect or a preferred aspect of the present invention is a vertical flow wrapper with a forming shoulder to form a film tube from a planar film, a filling tube to fill packaging items into the film tube, longitudinal sealing means to apply a longitudinal seal to the film tube, cross sealing/cutting-means to apply cross seals to the film tube and to cut the filled bag from the film tube, whereas the filling tube comprises fins and sealing means to produce edges in the film tube. Whereas the filling tube comprises a heating body which is heated without a connection, especially an electrical wire connection.

Preferably, the heating body is part of the fin. Preferably, each fin comprises a heating body.

Another aspect or a preferred aspect of the present invention is a packaging machine with a forming- and or sealing station, each comprising a heating element with a heating body, whereas the heat energy is transferred to the heating body without a connection, especially an electrical wire connection.

Preferably, the heating bodies are inserted into the heating element.

Preferably, the heating element comprises a sealing frame.

Another aspect of the present invention is an apparatus comprising an induction heating unit and a coil, whereas the coil is arranged around a recess (92) with two open ends.

Preferably, the coil and/or the induction heating unit is cooled by air.

Preferably, the induction heating unit (91) is separated from the coil.

The invention is now explained in further detail according to figures 1 - 15.
Figure 1 shows a double-twist wrap lollipop according to the state of the art, at a moment during manufacturing;
Figure 2 shows a double-twist wrap lollipop according to the invention at the same stage as figure 1;
Figure 3 shows the double-twist wrap lollipop of figure 2 at a next stage;
Figure 4A shows a double-twist wrap lollipop according to the invention, ready;
Figure 4B shows an alternative embodiment of a lollipop according to the invention;
Figure 5 shows a schematic view in perspective of a part of a packaging device for making lollipops according to figures 2-4A;
Figures 5A and 5B show a schematic view of a transfer station in the device of figure 5;
Figures 6A and 6B show a schematic view, transverse to the lollipop stick and in its extension, respectively, at a first packaging stage;
Figures 7A and 7B show a schematic view, transverse to the lollipop stick and in its extension, respectively, at a second packaging stage;
Figures 8A and 8B show a schematic view, transverse to the lollipop stick and in its extension, respectively, at a third packaging stage;
Figures 8C, 8D and 8E show an end view and side view of a sealing arm and a detail of the sealing surface of said sealing arm, respectively, in the packaging device of figure 5;
Figures 9A and 9B show a schematic view, transverse to the lollipop stick and in its extension, respectively, at a fourth packaging stage; and
Figures 10A and 10B show a schematic view, transverse to the lollipop stick and in its extension, respectively, at a fifth packaging stage.
Figures 11A-11B shows a schematic of a sandwich-wrapping with induction heating.
Figure 12 shows a schematic front view of a lollipop packaging device according to the invention;
Figures 12 A,C,E show schematic views of the process for arranging a foil sheet around the head of a lollipop, in consecutive steps;
Figures 12 B,D,F show the position of the diaphragm arms in the stages shown in the figures 12 A,C,E;
Figure 12 G shows a schematic of an induction coil.
Figures 13A, 13B show a schematic of a vertical flow wrapper.
Figure 14A- B show a schematic of a heating plate for example for a thermoformer or a tray-sealer.
Figure 15 show an embodiment of induction heating means.

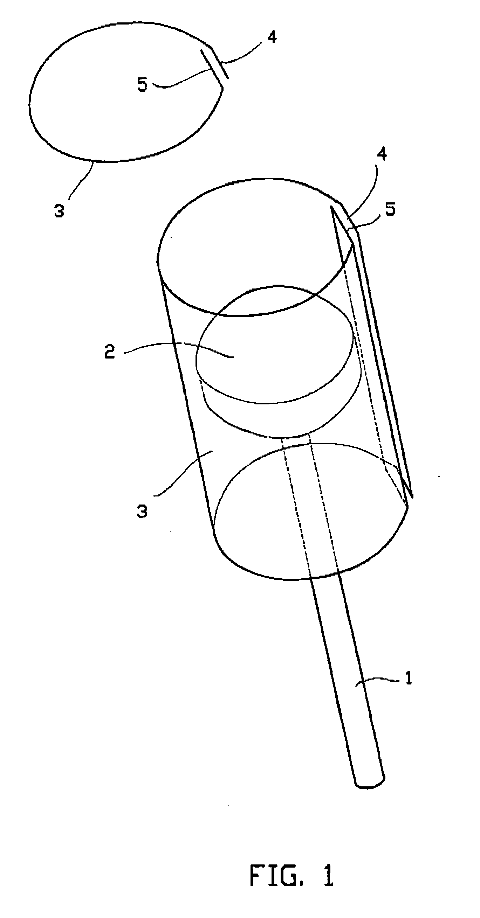

The lollipop shown in figure 1 comprises a stick 1 and a lollipop head 2, which, at a packaging stage, are enveloped by a foil sheet 3, of which, as shown at the top section of figure 1, the edges 4 and 5 have been placed over each other for forming a sleeve, which further down the process is twisted above the head 2 and below the head 2 around the stick 1. The edges 4 and 5 that overlap each other may shift with respect to each other. After the packaging has been completed a passage may have been formed between the edges 4 and 5 through which air and moisture may get to the lollipop head 2, which adversely affects the quality of the lollipop.

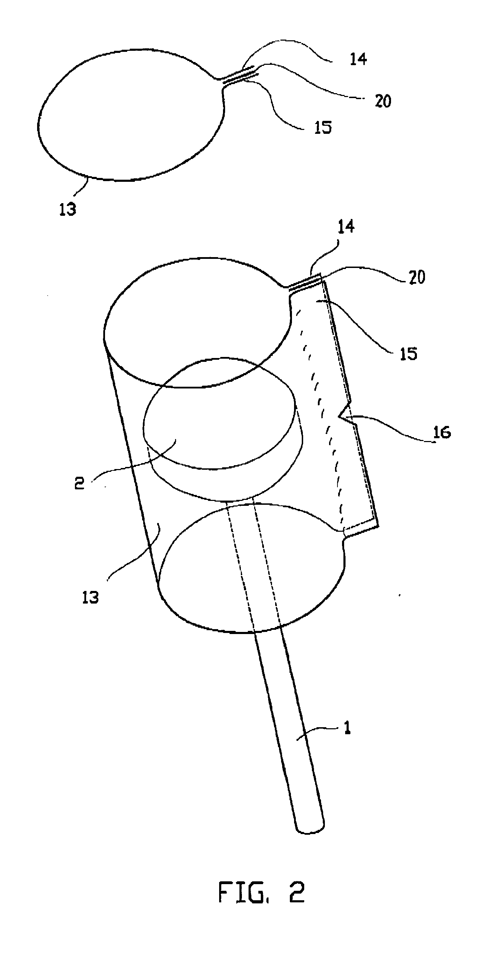

As shown in figures 2-4, the foil sheet 13, for instance made of polypropylene provided with a heat sealable layer, is transformed into an actual sleeve, without slit, wherein the edges 14 and 15 under the influence of heat, for instance by hot blow air, are sealed into an airtight and moisture proof seal edge 20. The seal edge 20 may be provided with a weakened area, particularly a notch 16, for initiating a tearing opening movement of the enveloping of the lollipop.

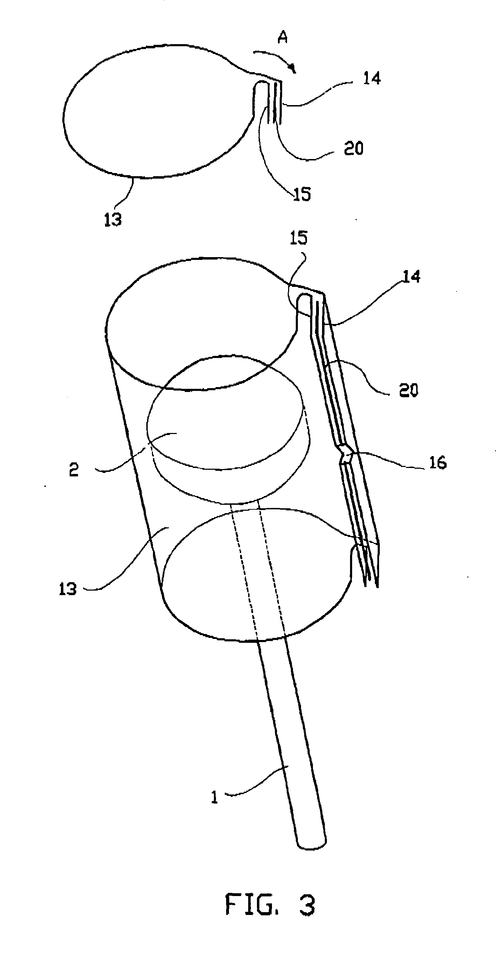

As can be seen in figure 3 the seal edge 20 is subsequently folded to lie flat against the sleeve-shaped packaging formed by sheet 13.

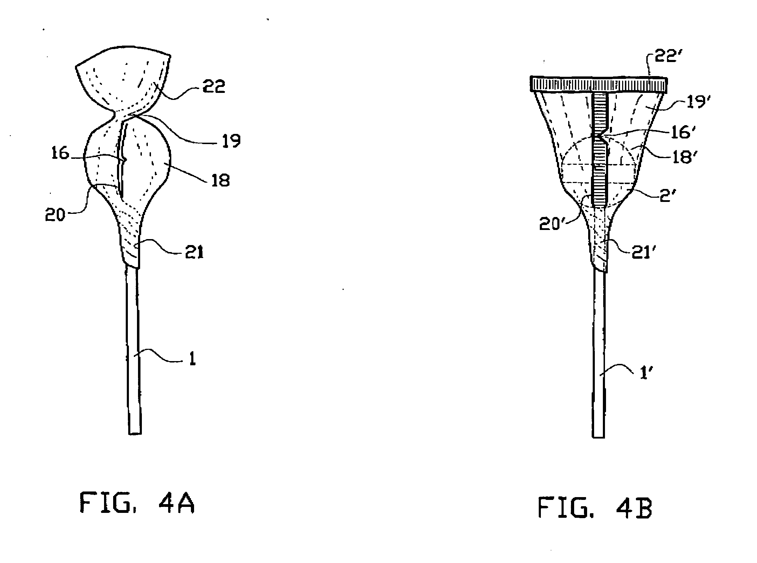

In the condition of figure 3 the foil sleeve closed in circumferential direction can be twisted at both longitudinal ends of the lollipop head 2 in the manner known per se, and be sealed as well, again for instance using hot blow air. Thus the sealed twisted areas 19 and 21 are formed (figure 4A), wherein at the free end a wing 22 is integrally formed. The head 2 is then enveloped by foil section 18, wherein the flat, turned seal edge 20 is accessible to a finger of the user, who is able to lift said edge, subsequently tear it open at the location of weakening 16 to subsequently take the lollipop out of the packaging.

The weakening or discontinuity may under certain circumstances also be formed by a tearing strip.

The lollipop according to figure 4A with the discussed packaging may preserve its quality for a long time, also in areas where with the packagings that have been common up until now the quality of the lollipops deteriorates very quickly.

The same applies to the lollipop shown in figure 4B, in which only one end section of the foil sleeve has been twisted. The head 2' is enveloped by foil section 18', and provided with longitudinal seal 20' with weakening 16'. Below the head 2' the foil tube is twisted (21'), yet above the head 2' the foil tube is untwisted in fan-shaped, flat flaring section 19', yet transversely sealed at the location of seam 22'.

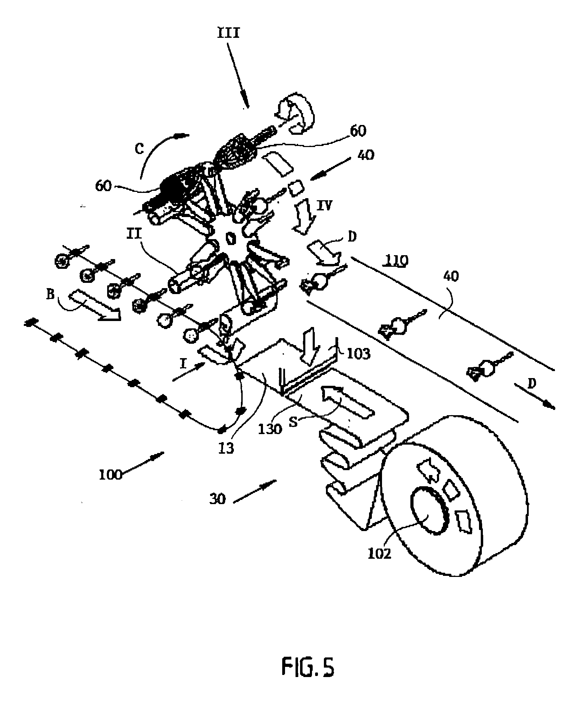

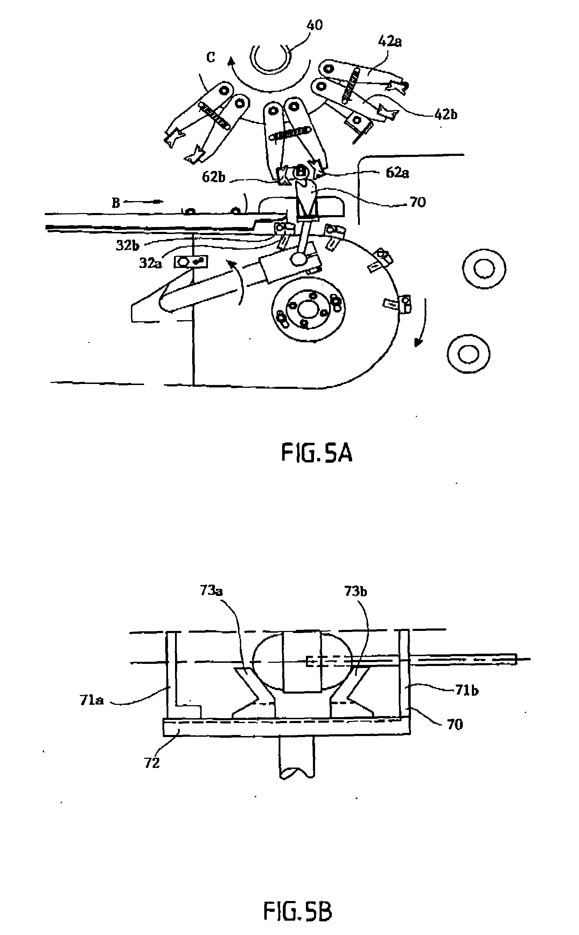

The (part of) packaging device 100 shown in figure 5 comprises a schematically shown supply device 30 for a web of packaging foil 130, which is unrolled from a supply roll 102 and driven in the direction S and cut into pieces of foil sheet 13 by means of blades 103. The cut off foil sheets 13 are intermittently discharged to a series of lollipops supplied in direction B in conveyance clamps 32a,b, as known per se from the applicant's commercially available machine TwistWrapper 300. Each lollipop including a foil sheet 13 is consecutively received in a wheel 40, driven in the direction C about a horizontal centre line. The transfer is schematically shown in figures 5A and 5B. Transfer device 70 moving up and down, takes the lollipops from the conveyance clamps 32a,b opened at that location wherein the lollipop head is supported on support members 73a,b and the stick on support member 71 b, which support members with the member 71 a are attached to support plate 72 of the transfer device 70. Between the support members 73a,b there is room for engagement of the head by clamping members 62a,b that are attached to wheel 40.

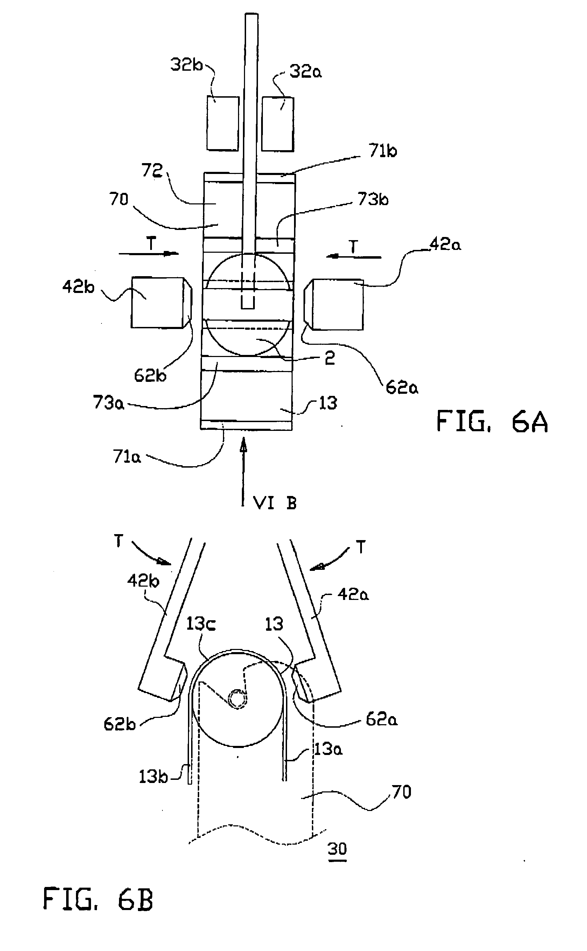

As is also schematically shown in figure 6B the lollipops in supply B are held clamped on the sticks by pairs of clamping jaws 32a, 32b. The second wheel 40 is provided with a series of lollipop holders 60, that circulate along with the second wheel 40 in the direction C.

In the second wheel 40 a number of stations can be distinguished in the circulation, namely station I, where the lollipops including foil sheets are accommodated, station or track II where the foil sheet 13 is placed around the lollipop head and sealed longitudinally, station III where twisting takes place and station IV where the packaged and twisted lollipop is discharged in the direction D to a discharge station 110.

The lollipop holders 60 arranged on the disc 40 have a number of lollipop head clamping arms 42a, 42b, provided with clamping members 62a,b and furthermore hingingly driven (in a manner not shown) in the wheel 40, in order to be brought in and out of clamping engagement of the head of a lollipop.

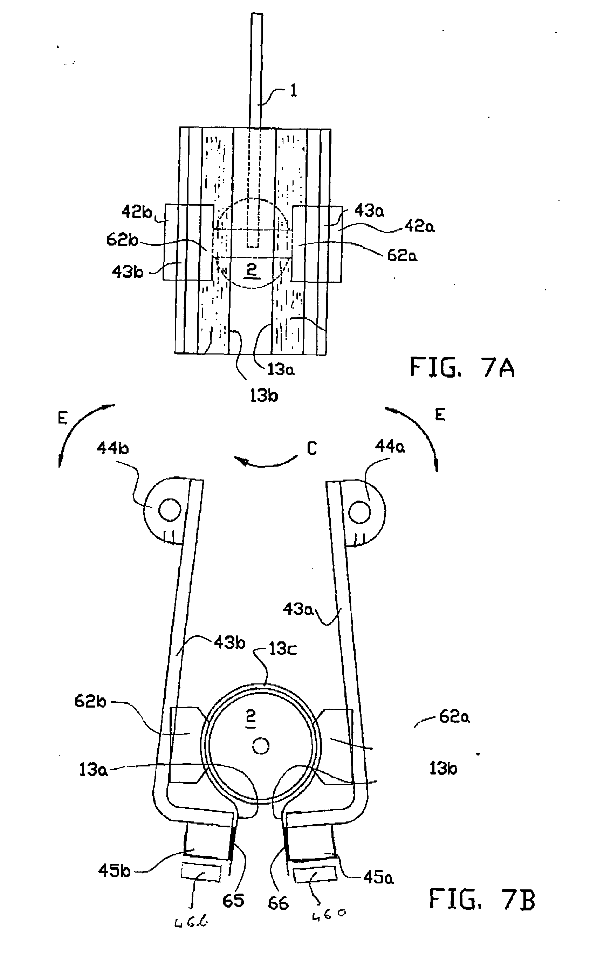

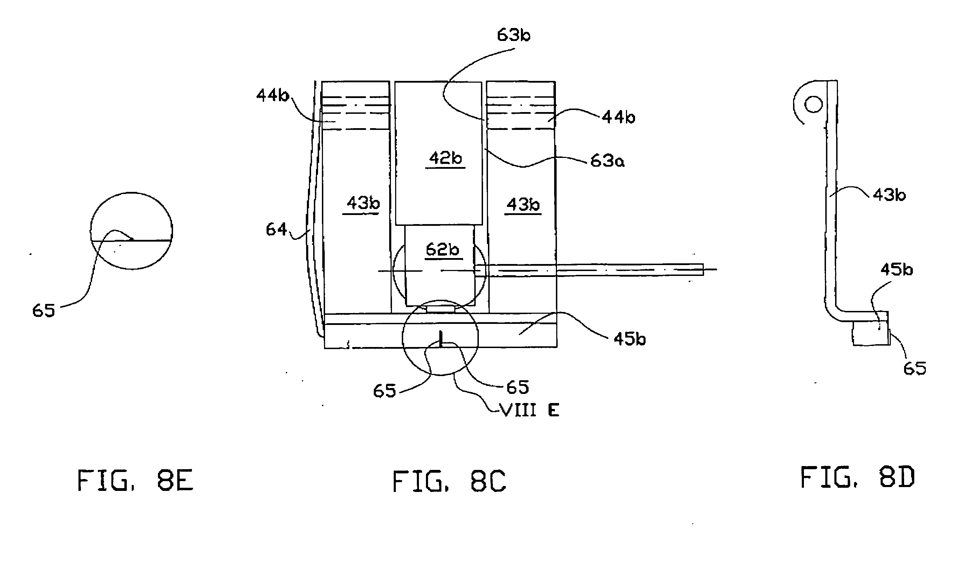

The lollipop holders 60 furthermore comprise sealing arms 43a, 43b, which, as can be seen in figure 7B, are hingingly attached on the second wheel 40 at the location of hinges 44a, 44b, and are L-shaped with sealing bodies 45a, 45b, which are heated by stationary heating means 46a, 46b, while the sealing arms pass the heating means. In the present example, the heating means are induction heating means. There is no connection, especially no wire connection between the heating means and the sealing means/heating body. On sealing body 45b (see figure 8E) a blade 65 has been provided that is able to cuttingly cooperate with an anvil 66 on sealing body 46a. The blade 65 does not extend over the full height of the sealing body 46a, but ends at a distance from the edge of the sealing rod that is situated at the lollipop side.

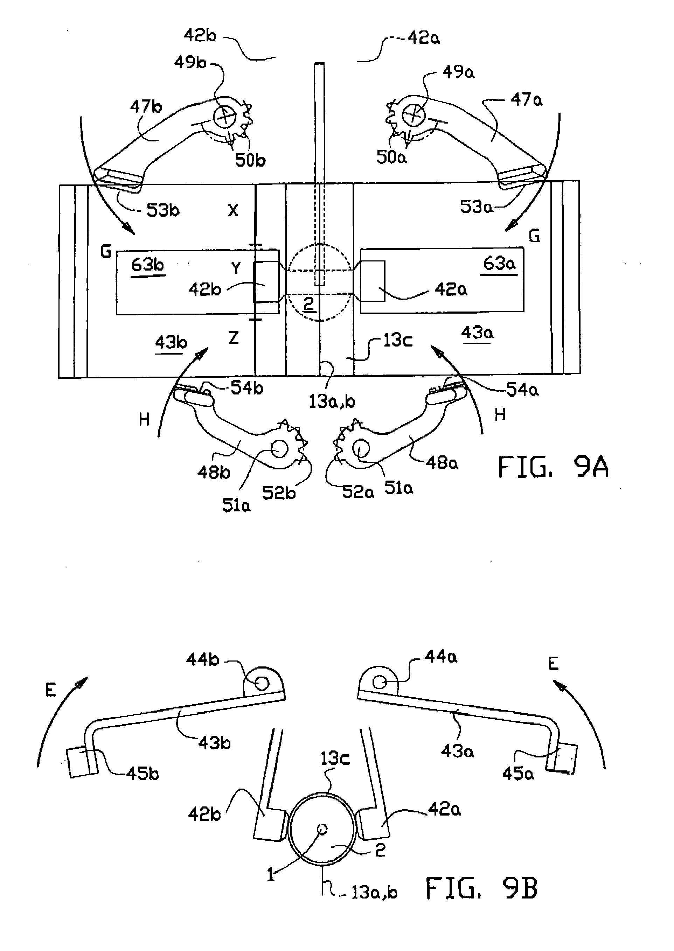

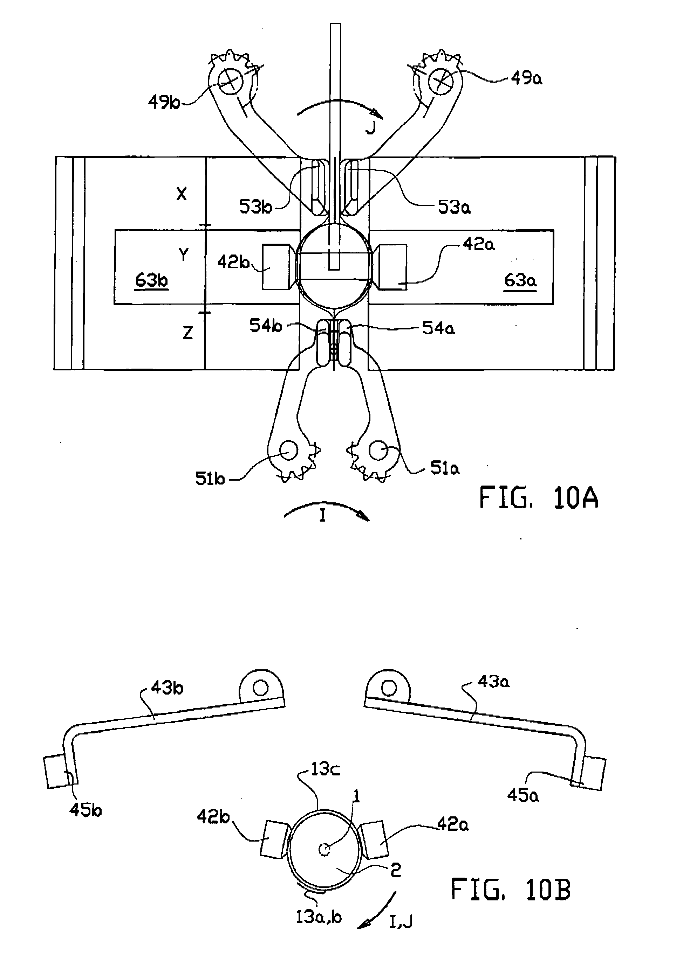

As further shown in figures 9A and 10A two pairs of twisting arms 47a, 47b and 48a, 48b are positioned at the location of station III, which arms are rotatably attached in manner that is not shown at the location of hinges 49a, 49b and 51 a, 51 b in order to be rotated in the directions G and H. The twisting arms 47a, 47b and 48a, 48b are provided with teeth 50a, 50b and 52a, 52b near their hinge end for cooperation with a drive rack (not further shown) in order to be able to carry out the said rotation.

At their other ends the twisting arms 47a, 47b and 48a, 48b are provided with foil engagement surfaces 53a, 53b and 54a, 54b. The twisting arms 47a, 47b are provided with an opening 63a,b to offer room to the sealing arms 43a, 43b, also see figure 8C.

In the partial track I the treatment shown in figures 6A and 6B takes place. The stick of the lollipop is still clamped by the clamping arms 32a, 32b of the supplier. The clamping arms 42a, 42b of the second wheel 60 rotate inwards, and with the clamping members 62a,b start clamping the lollipop on the head, with the foil sheet 13 in between. Then the clamping arms 32a, 32b of the supplier are released. The lollipop is then only held on the wheel 40.

Immediately subsequent, while rotating in direction C, in partial track II, the sealing arms 43a, 43b are rotated towards each other in the direction E. The heated sealing bodies 45a, 45b contact the pending foil sheet areas 13a, 136 and bring them towards each other, as can be seen in figure 7B.

This movement is continued until the foil sheet areas 13a, 13b touch each other and the sealing bodies 45a, 45b of the sealing arms 43a, 43b extend just below the head 2 of the lollipop. The sealing arms 43a, 43b here also function as (part of the) means for placing the foil sheet fully around the lollipop.

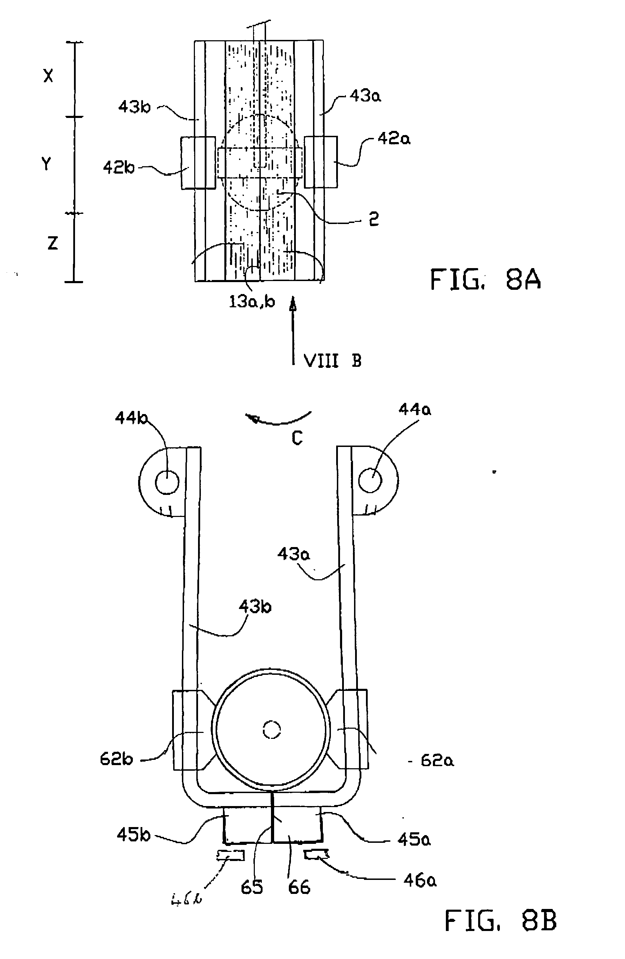

In addition or subsequently the heating elements 46a, 46b are activated and the foil areas 13a, 13b are sealed together, see figure 8B.

Then a foil tube 13 closed by sealing is achieved, which fully surrounds the lollipop head 2 in partial area Y (see figures 8A, 9A), and protruding therefrom in longitudinal direction of the tube in foil tube edge areas X and Z.

Subsequently the sealing arms 43a, 43b can be moved apart in the direction E (see figure 9B), and the lollipop holders 60 arrive at twisting station III. At that location the wheel 40 is held still and the twisting arms 47a, 47b and 48a, 48b are rotated in the direction G and H in order to fixedly clamp the respective foil tube sections X and Z between the twisting surfaces 53a, 53b and 54a, 54b. The stick, however, remains clamped at all times between the clamping arms 42a, 42b, on the head, including the foil.

Subsequently the twisting arms 47a,b and 48a,b are rotated in the directions I and J, as schematically shown in figure 10A, about a centre line coinciding with the centre line of the stick. The clamping arms 42a, 42b here do not rotate any longer, so that the foil tube 13 is rotated, wherein the foil tube section X is twisted around the stick and the foil tube section Z is twisted into a fan-shaped knot. During twisting the twisting arms 47a,b and 48a,b will be moved slightly towards the lollipop head in the manner known per se (TwistWrapper 300).

Because of the twisted ends and the sealing seal continuing therein the lollipop head 2 will be fully closed off from the ambience.

After the twisting arms 47a, 47b and 48a, 48b have been removed from the lollipop including foil and have at least been slightly rotated back again the wheel 40 is rotated further and the packaged lollipop is discharged in station IV in direction D to a discharge station 110, after the clamping arms 42a, 42b have been opened.

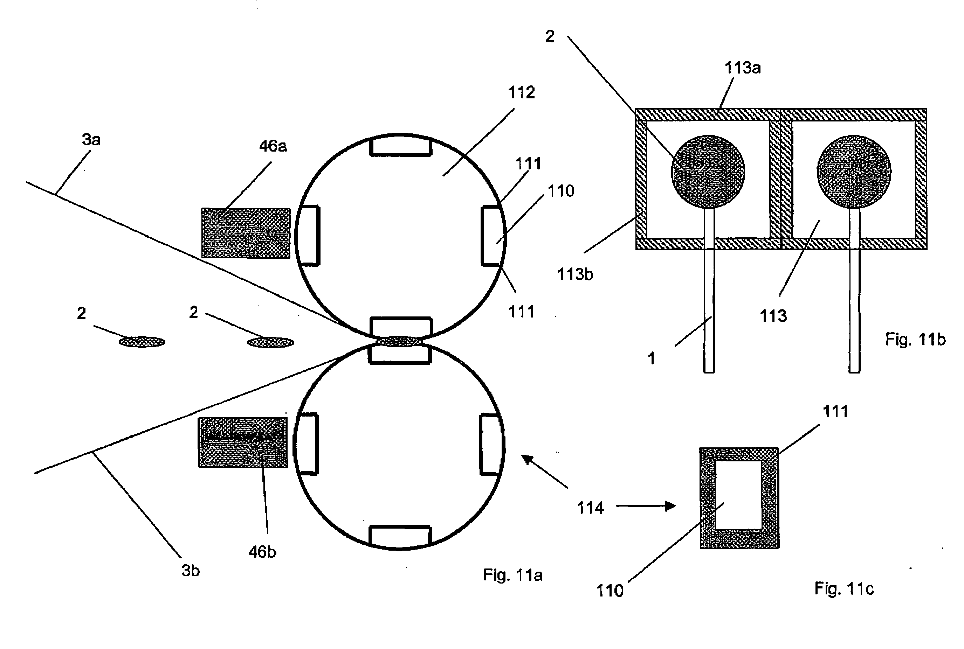

Figure 11A - C show an application in which the lollipop head 2 is packaged in a sandwich packaging 113 by sealing two film sheets 3A, 3B, together with longitudinal seals 113A and cross seals 113B, as can be seen in figure 11 B. The packaging machine is depicted in figure 11A. The lollipops heads 2, together with the sticks 1, are transported from the left to the right towards two drums 112, which are counterrotating. The drums 12 comprise four sealing areas 114, each having a recess 110, into which the heads 2 of the lollipop fit, and heating bodies 111, which are also the sealing means in the present example. The heating bodies 11, which are in the present example stainless steel frames, are heated by heating means 46A, 46B. The person skilled in the art understands that figure 11 A is only a schematic and that in reality the distance between the heating bodies is much smaller, because the distance between the heating bodies 111 is equivalent to the width of the cross seal 113B. The heating means are stationary induction heating means, which heat the heating bodies 111 while they pass by. There is no connection, especially no wire connection between the heating bodies 111 and the heating means. The rest of the drum is made from a heat insulating material. Between these heated sealing frames 111, the films 13A, 13B are pressed together in the sealing area and, consequently sealed, so that the seals 113A and 113B are applied. Thus, the drums continuously seal the lollipop heads into a sandwich sealing.

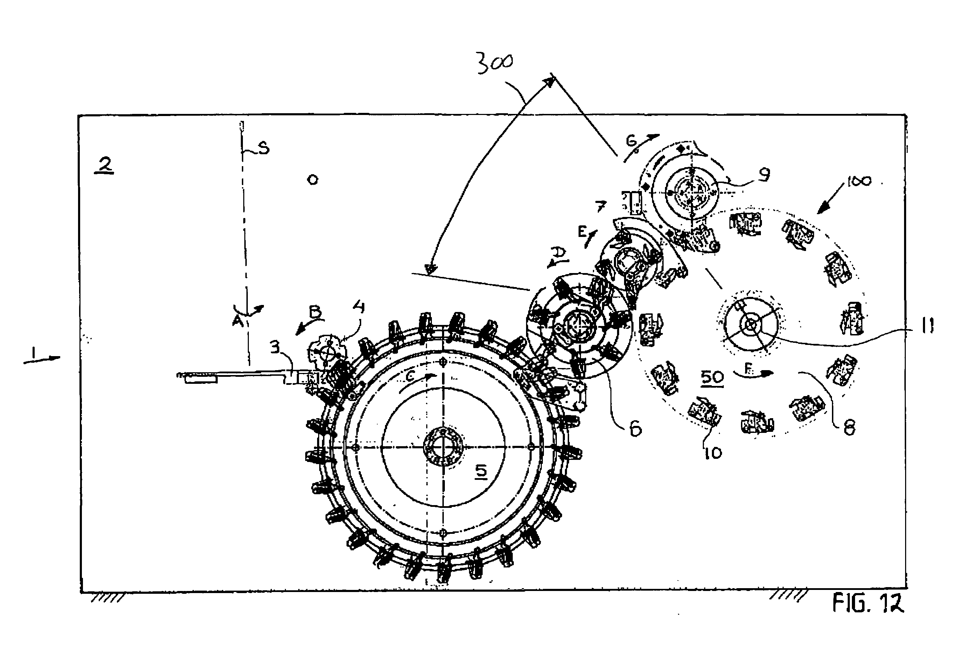

The packaging machine 1 for lollipops shown in figure 12 comprises a frame 2, in which among others are arranged a sorting and distribution disk 3 driven about a vertical centre line S in the direction A, on which disk lollipops supplied in bulk are singled in the known manner. For removing the lollipops from the distribution disk 3 a removal roller 4 is arranged, which rotates in the direction B.

From the removal roller 4 the lollipops are transferred to a first transfer disk 5 driven in direction C, subsequently to a second transfer disk 6 rotating in the direction D, and then to a third transfer disk 7 rotating in the direction E. From the transfer disk 7 the lollipops are transferred to a drum 8 of the wrapping station 100, which drum is rotated in the direction F and in which the lollipops are surrounded with foil material supplied to them for packaging. The packaged lollipops are discharged to a discharge disk 9 rotating in the direction G and discharging the packaged lollipops to for instance a discharge chute (not shown).

The drum 8 has an axle 11, with which the rotatable part 50 (also see figure 12A) is rotated. A series of assemblies 10 of stick clamps, wrappers and diaphragm arms is arranged on the rotatable part 50.

Figure 12A shows the mutual position in axial direction of some parts of those assemblies 10. On the left-hand side a stick clamp 20 is shown, having clamping member 21, with which a stick S, on which lollipop head R, can be firmly held in the revolution of the drum part 50.

On the right-hand side of the lollipop head R there is a plug or cap 23 attached at the end of an axially reciprocally moving bar 22, of which the axial position is defined in a manner known per se by means of a curve that is not further shown and which is part of the fixed part of the drum 8.

The pin 22 extends through a sleeve 29, on which a pair 25 of wrapping arms 26a, 26b at the location of hinge points 27 are hingedly arranged, wherein the sleeve 29 is provided with teeth that are not further shown, which mesh with a rack that is not further shown and which belongs to the fixed part of the drum 8. The sleeve 29 is rotatably bearing mounted in bearing 28. At the side the pin 22 is provided with teeth 22a that mesh with teeth on the wrapping arms 26a, 26b in order to rotate them when the pin 22 moves.

On the left-hand side of the wrapping arms 25 an assembly 30 of diaphragm arms 31 a, 31 b is arranged, which are further shown in figure 12B. The diaphragm arms 31 a, 31 b are provided sealing means 32a, 32b in order to be able to seal the foil sheet. In the present case the sealing means and the heating body are identical. The sealing means/heating body is heated by the stationary heating means 400, each time they pass the heating means. There is no connection, especially no wire connection between the heating means 400 and the sealing means/heating body. The diaphragm arm 31 a is shorter than the diaphragm arm 31 b, and a particularity is that it is provided with an operation arm 33 having an operation part 34 designed like a roller. The operation arm 33 is situated at the same side as the aforementioned (not shown) teeth of the sleeve 29. The arms 31 a, 31 b, respectively, are rotation-fixedly attached on axles 36a, 36b. The operation arm 33 is rotation-fixedly arranged on the axle 36a. The operation part 33 forms one fixed unity with part 35a, which is provided with teeth 37a that mesh with teeth 37b on part 35b that is rotation-fixed to the inner end of the axle 36b. With a spring and/or a curve roller that is not shown, the arms 31 a, 31 b are biassed towards each other.

By rotation of the part 35a, induced by movement of the roller 34, the arm 31a will rotate, wherein, due to the meshing of the teeth 37a, 37b, the arm 31 b will to an equal extent rotate in the opposite direction.

In figure 12B it is shown that the opening O that is left free by the diaphragm arms 31 a, 31 b is adjusted to the size of the head R of the lollipop.

In figure 12A the heating means 100 are also depicted which have a shape as shown in figure 12G. The function of the heating means are explained later on. In figure 12B the heating means have been omitted for the sake of clarity.

Figure 12A shows the moment in which a foil sheet for the head R is already supplied and subsequently secured on the head R by means of the cap 23, after which the foil sheet is cut off from the web of foil material from which it originated. Subsequently the clamp 20 in a manner known per se that is not shown, is moved to the right, as considered in the drawing, in order to pass the foil sheet F and the head R through the opening O, within the reach of the wrapping arms 25. The pin 22 is moved along.

In figure 12C the foil head R has almost been passed through the opening O. As a result of the slight play of the head R with respect to the diaphragm arms 31 a, 31 b, the foil sheet S has been wrapped in a snugly covering and smooth manner around the head R. The diaphragm arms 31a, 31 b are now moved towards each other under the influence of the spring connecting said arms to each other (figure 12D).

In figure 12E the passage of the lollipop head R with foil F has fully been passed through the opening O. The diaphragm arms 31a, 31 b clamp around the stick S, while clamping the part F1 of the foil sheet F that is situated around the stick. As a result of the meshing of the teeth of the arms 26a, 26b with the teeth 22a on pin 22, the wrapping arms 26a, 26b have been brought into a position engaging the head R at a returning motion of the pin 22.

In this case the design is such that the cap 23 in the position shown in figure 12C remains slightly free from the lollipop head R.

Subsequently the sleeve 29 and thus the wrapping arms 26a, 26b are rotated about the lollipop head R, wherein the clamp 20 keeps holding the stick S and the foil sheet part F1. As a result the foil sheet F is twisted behind the head R. Said part F1 is then also sealed by activation of the heating elements 32a, 32b.

After the twisting and sealing has been completed the diaphragm arms 31 a, 31 b are opened again and the clamp 20 is moved back again, in order to be able to discharge the lollipop to the discharge station 9.

Then a new cycle can be started again.

Figur 12G shows an induction coil suitable for the bunch wrapper according to figures 12A -12F. The coil is pancake-shaped and located in the vicinity of the heating body 32.

Coming back to figure 12. With reference number 300 the angle is indicated in which the heating, preferably the induction heating takes place.

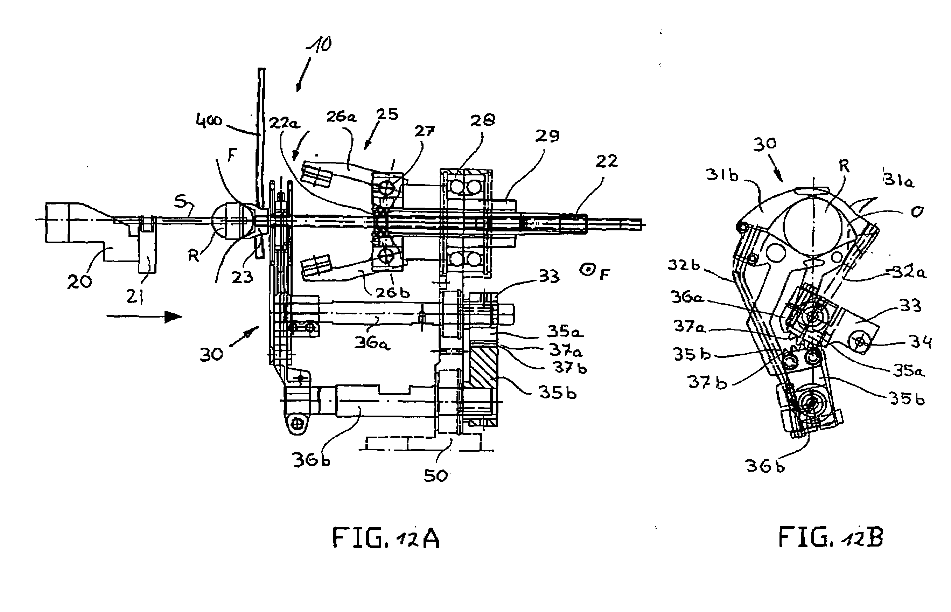

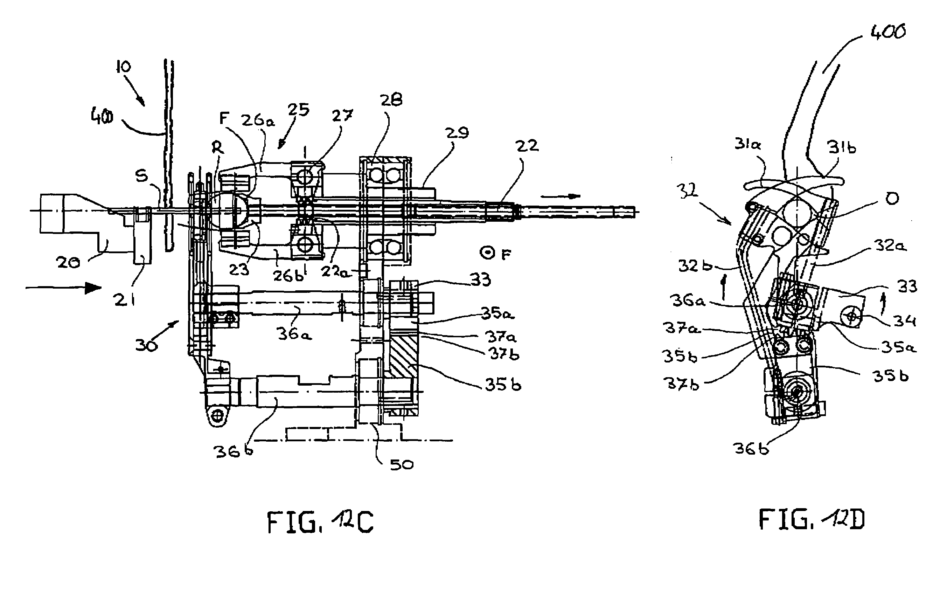

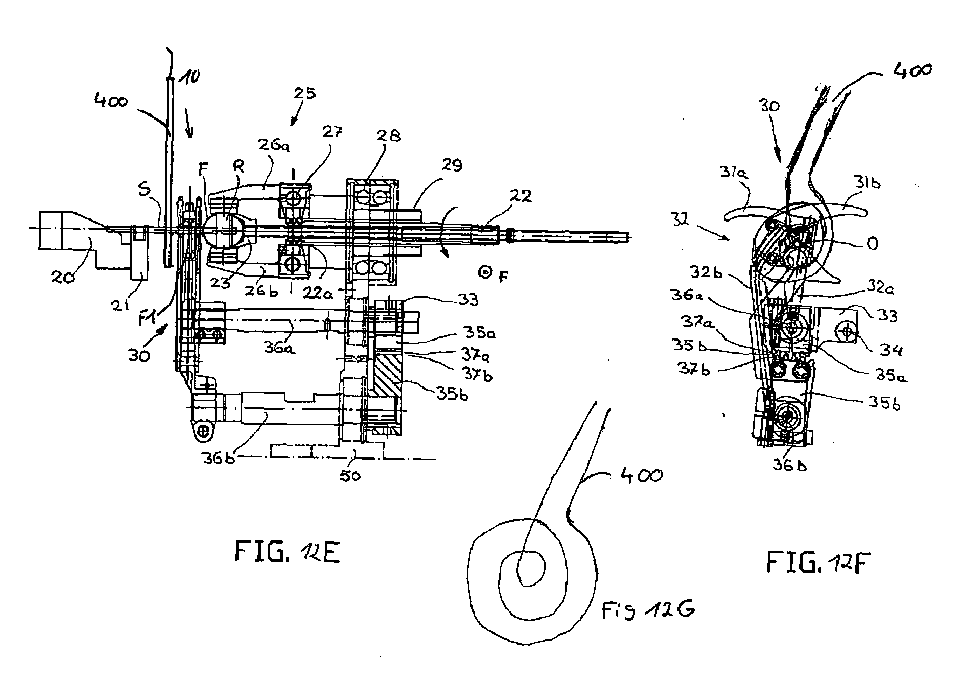

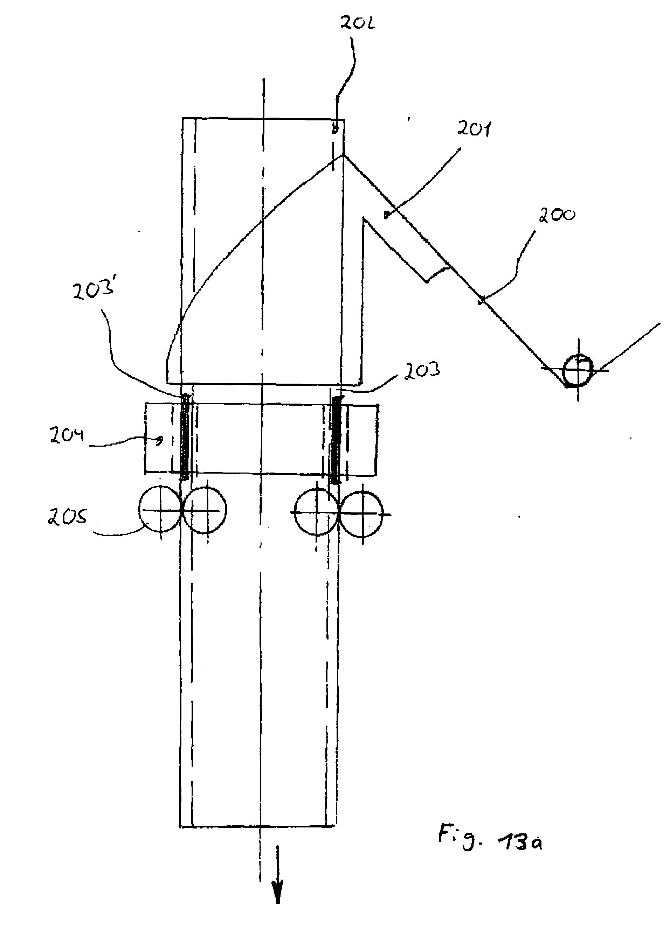

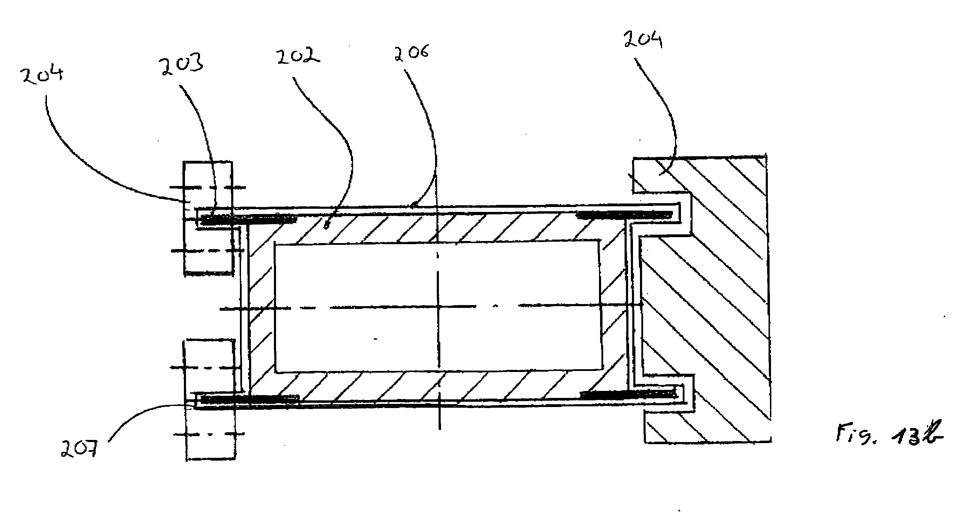

Figure 13 shows a schematic of a vertical flow wrapper. A plane film 200 is formed via a forming shoulder 201 into a film tube 206 around a filling tube 202. The filling tube 202 comprises four fins 203, which form edges 207 into the film tube 206. This is especially needed for so-called quatro-box type packaging bags, as they are known, for example, from EP 1 106 508 A1, which is included herewith by reference. The film tube is moved downwards as shown by the arrow. The filling tube 202 and the fins 203 are essentially made from aluminium. However, in the parts 203', the aluminium is replaced by stainless steel which form the heating body in the present application. These four stainless steel parts 203' are heated via inducting means 204. Due to the heating of the heating bodies 203', the edges 207 of the film tube, which surround the heating bodies, are also heated.

Subsequently, as can be seen in figure 13A, there is a pair of rolls 205 below every fin. These rolls press the heated film 207 together, so that it is sealed and forms sealed edges 207. The heated fins are an example for a heating body which is difficult to access, because it is surrounded by the film tube.

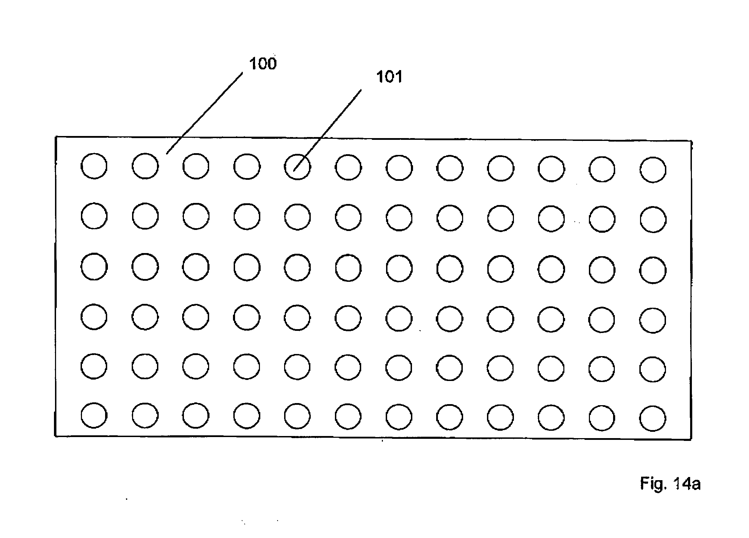

Figure 14A shows the schematic of a heating element of a packaging machine, which can be used, for example, in the forming or in the sealing station. In the forming station, trays are formed from a flat plastic film. In the sealing station, two films are sealed together. The heating element 100 is made of aluminium and comprises an array of holes 101, into which stainless steel, cupper or the like cylinders 193 can be inserted. These cylinders, which are the heating bodies, respond much better to induction heating than aluminium, so that the area around the holes in which stainless steel, cupper or the like cylinders are filled is are much better heated than the area around holes which are not filled at all or which are filled with aluminium cylinders. The heating element is heated with induction. There is no connection, especially no electrical wire between the heating means and the heating bodies 103.

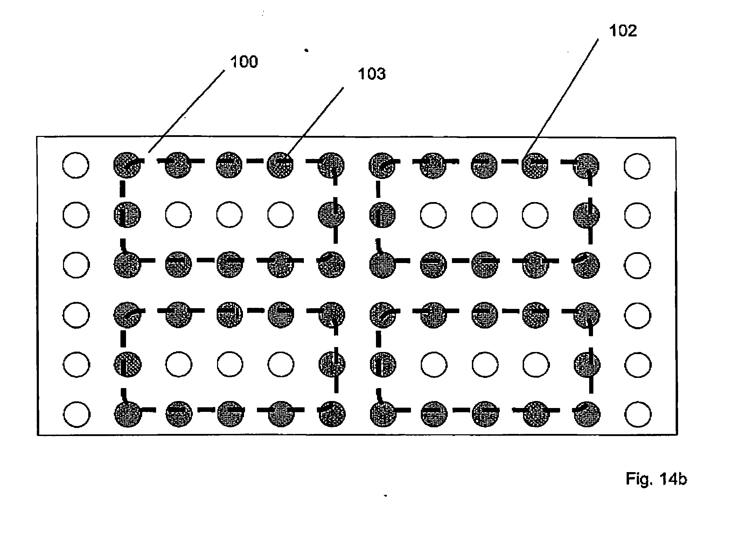

**Figure 14B** shows a heating element 100, which has sealing frames 102 at its back, which is schematically shown by the dashed lines. In order to heat these sealing frames 103, the holes which are associated to this sealing frame have been filled with stainless steel cylinders. Subsequently, an inducting field is imposed on the heating element and essentially only the part where the stainless steel cylinders 103 are present, is heated, so that the heat is very concentrated in the area of the sealing frame. A person skilled in the art understands that, if another sealing frame is used, other holes can be filled with stainless steel cylinders. Thus, the inventive heating element can be very flexibly used to heat the sealing frame where needed.

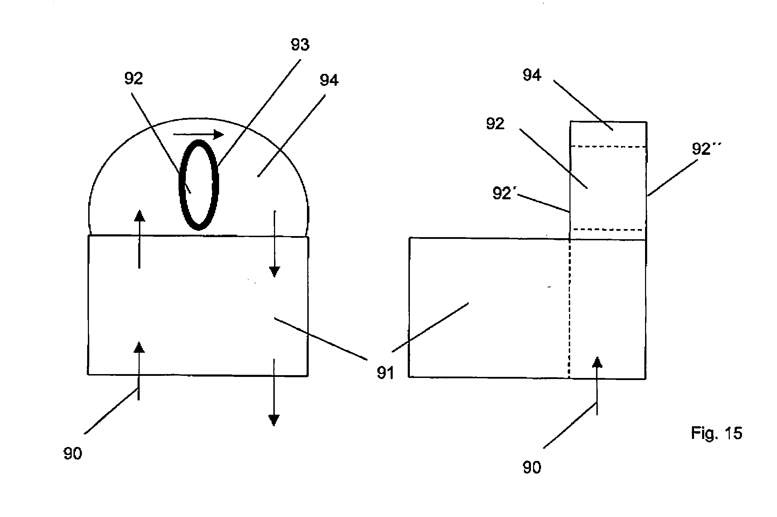

Figure 15 shows an apparatus which comprises an induction heating unit 91 and a coil 93. The coil 93 is arranged around the recess 92 into which heating bodies can be inserted, so that they are heated by the field created by the coil 92. The recess 92 has openings at both ends 92', 92", so that the recess cannot be clogged, for example by a lollipop. In case a lollipop falls into the recess 92 and sticks in there, it will be pushed out of the recess 92 by the heating body. Furthermore, the coil 93 is cooled by air 90, which circulates around the coil 93. The induction heating unit and the coil are separated so that the air 90 does not get into contact with the induction heating coil.

## Claims

1. Apparatus for packaging items (2) into a film (3), whereas the film (3, 3a, 3b) is formed and or sealed by forming- and/or sealing-means (43a, 43b, 114, 32, 205) each comprising a heating body (45a, 45b, 111, 32a, 32b, 203', 101) which is heated by heating means (46a, 46b, 111, 32a, 32b, 204) and which is moving and/or difficult to access **characterized in, that** the heat energy is transferred from the heating means to the heating body (45a, 45b, 111, 32a, 32b, 203', 101) without a connection, especially no electrical wire connection.

2. Apparatus according to claim 1, **characterized in, that** the heating means is a flame emitter, means to produce a hot fluid flow, means of induction, means of radiation, especially microwave means.

3. Apparatus according to one of the preceding claims, **characterized in, that** it comprises means to precisely control the heat energy transfer.

4. Apparatus according to one of the preceeding claims, **characterized in, that** the apparatus is a confectionary packaging machine, a vertical- as well as a horizontal flow-wrapper, a thermoformer or a tray sealer.

5. Apparatus preferably according to claim 4, **characterized in, that** the confectionary is a lollipop with a stick (1), wherein the lollipop head (2) is packaged in a packaging sheet, such as a packaging film (3), whereas the packaging film is sealed at its edges (4, 5) with sealing means (43a, 43b), each comprising a heating body (45a, 45b), whereas the heat energy is transferred from the heating means to the heating body (45a, 45b) without a connection, especially an electrical wire connection.

6. Apparatus preferably according to claim 4, **characterized in, that** the confectionary is a lollipop with a stick, wherein the lollipop head (2) is packaged in a sandwich packaging (113) by sealing two film sheets together with the seals (113a, 113b) with sealing means (114), whereas it comprises a heating body (111) which is heated by heating means (46a, 46b) and whereas the heat energy is transferred from the heating means to the heating body (111) without a connection, especially an electrical wire connection.

7. Apparatus according to claim 6, **characterized in, that** the sealing means are located on a drum.

8. Packaging machine for lollipops, preferably according to claim 4, comprising a drum having a stationary, fixed drum part and having a drum part that is rotatable with respect thereto and includes a series of stick holders, a supply for the lollipops towards the stick holders and a supply for packaging material for the lollipops, such as a foil, towards the drum, a discharge for discharge of packaged lollipops away from the drum, wherein the packaging material supply is adapted for consecutively bringing a sheet of packaging material in front of the lollipop heads, wherein the drum is furthermore provided with means for relatively moving the stick holder and the sheet of packaging material in a first trajectory on the drum in order to let said sheet envelop or surround the lollipop head, wherein the rotatable drum part is furthermore provided with a diaphragm at every stick holder, said diaphragm being positioned at the side of the sheet of packaging material facing away from the lollipop head in order to dispose said sheet around the head in said relative movement of the stick holder and said sheet of packaging material, in which the head moves through the opening defined by the diaphragm, wherein the diaphragm is furthermore provided with means for in a next, second trajectory on the drum sealing the packaging material at or near the location of the transition of the head to the stick, wherein the sealing is carried out by sealing-means (32a, 32b) each comprising a heating body which is heated by heating means (400), whereas the heat energy is transferred from the heating means to the heating body (32a, 32b) without a connection, especially an electrical wire connection.

9. Apparatus according to claim 8, **characterized in, that** the heating means is a flat induction coil.

10. Vertical flow wrapper, preferably according to claim 4, with a forming shoulder (202) to form a film tube (206) from a planar film (200), a filling tube (202) to fill packaging items into the film tube, longitudinal sealing means to apply a longitudinal seal to the film tube, cross sealing/cutting-means to apply cross seals to the film tube (206) and to cut the filled bag from the film tube (206), whereas the filling tube (202) comprises fins (203) and sealing means (205) to produce edges (207) in the film tube (206) **characterized in, that** the filling tube (202) comprises a heating body (203') which is heated without a wire connection.

11. Vertical flow wrapper according to claim 10, **characterized in, that** the heating body (203') is part of the fin (203).

12. Vertical flow wrapper according to one of the preceding claim, **characterized in, that** each fin (203) comprises a heating body (203').

13. Packaging machine, preferably according to claim 4, with a forming- and or sealing station, each comprising a heating element (100) with a heating body (103), **characterized in, that** the heat energy is transferred to the heating body (103) without a connection, especially an electrical wire connection.

14. Packaging machine according to claim 13, **characterized in, that** the heating bodies (101) are inserted into the heating element.

15. Packaging machine according to claim 13 or 14, **characterized in, that** it comprises a sealing frame (102).

16. Apparatus comprising an induction heating unit (91) and a coil (93), **characterized in, that** the coil is arranged around a recess (92) with two open ends.(92', 92'').

17. Apparatus according to one of the preceding claims, **characterized in, that** the coil (93) and/or the induction heating unit (91) is cooled by air (90).

18. Apparatus according to one of the preceding claims, **characterized in, that** the induction heating unit (91) is separated from the coil.
